# EUROPEAN PATENT APPLICATION

(11) **EP 1 493 477 A2**
(43) Date of publication of application: **05.01.2005**
(21) Application number: 04015179.7
(22) Date of filing: 29.06.2004
(51) Int. Cl.: B01D 21/00, C02F 3/12

(54) **Activated sludge system for purifying household waste waters**

(30) Priority: 02.07.2003 IT mi20030305 U
(71) Applicant: ISEA S.p.A., 29100 Piacenza (IT)
(72) Inventor: Tarenzi, Rosolino, 29100 Piacenza (IT); Sestito, Ilario, 29100 Piacenza (IT)
(74) Representative: Cicogna, Franco

(57) **Abstract**

The present invention relates to an activated sludge system for purifying waste water coming from civil house drains, comprising an oxidation basin to which leads an inlet duct for water to be purified, and in which is arranged a sedimentation device communicating with the outside through a draining pipe.

In the oxidation basin an air diffuser is moreover arranged.

The main feature of the invention is that the activated sludge system further comprises a blowing compressor, coupled to the air diffuser and arranged in the space defined by a cap overlaying the oxidation basin.

## Description

### BACKGROUND OF THE INVENTION

The present invention relates to an activated sludge system for purifying waste water from civil house drains.

As is known, activated sludge systems for purifying waste water generally conventionally comprise an oxidation basin, in which water to be purified is supplied.

Said water is processed by an air diffuser, designed for supplying a large amount of microbubbles, contributing to properly oxidating the waste water.

For supplying the required oxidation air amount, a compressor is conventionally used, which generally supplies with pressurized air a plurality of adjoining processing basins, said compressor being usually arranged outside of said basins.

In many cases, the mentioned compressors draws moistened air, and, in the time, a lot of condensate is consequently accumulated, which is susceptible to damage the driving motor, if the latter is not properly protected.

### SUMMARY OF THE INVENTION

Accordingly, the aim of the present invention is to overcome the above mentioned drawbacks, by providing an activated sludge system for purifying waste water, in which the compressor is arranged in a properly protected position, thereby preventing any condensate material from accumulating inside said compressor.

Within the scope of the above mentioned aim, a main object of the present invention is to provide such an activated sludge system, which can be made by very simple operations and including a plurality of processing basins which can be independently operate.

Another object of the present invention is to provide such an activated sludge system which, owing to its specifically designed construction, is very reliable and safe in operation.

Yet another object of the present invention is to provide such an activated sludge system for purifying waste water from civil-house drains, which can be easily made and which, moreover, is very competitive from a mere economic standpoint.

According to one aspect of the present invention, the above mentioned aim and objects, as well as yet other objects, which will become more apparent hereinafter, are achieved by an activated sludge system for purifying waste water from civil house drains, comprising an oxidation basin with which a waste water inlet duct communicates, and in which a sedimentation device is arranged, said sedimentation device communicating with the outside through a drain duct, in said basin an air diffuser being moreover arranged, characterized in that said activated sludge system further comprises a blowing compressor coupled to said air diffuser and arranged in a space defined by a cap overlying the oxidation basin.

### BRIEF DESCRIPTION OF THE DRAWINGS

Further characteristics and advantages of the present invention will become more apparent hereinafter from the following detailed disclosure of an activated sludge system for purifying waste water from civil house drains, which is illustrated, by way of an indicative, but not limitative example, in the accompanying drawings, where:

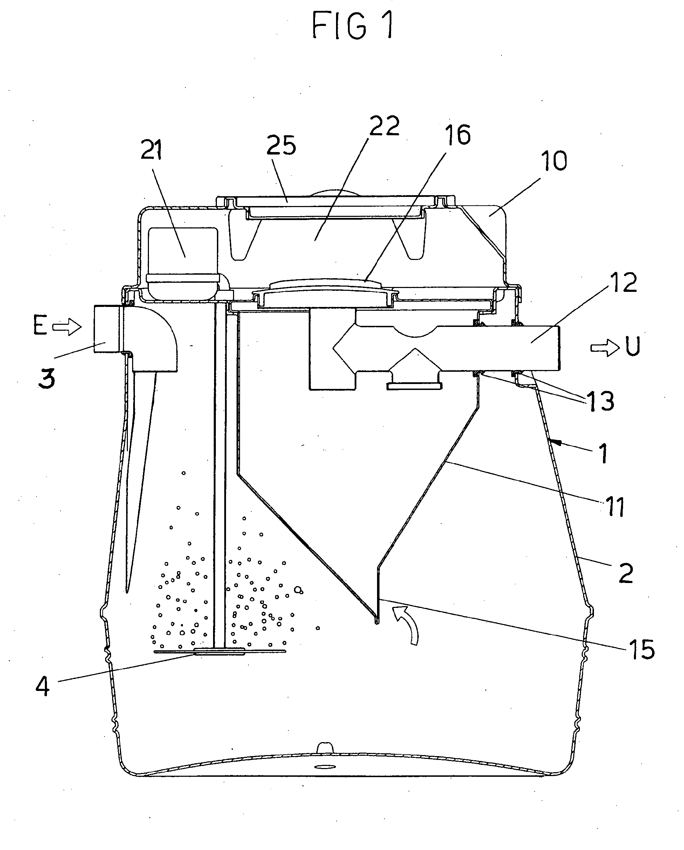

Figure 1 is a schematic cross-sectional view illustrating the activated sludge system according to the present invention;
   and

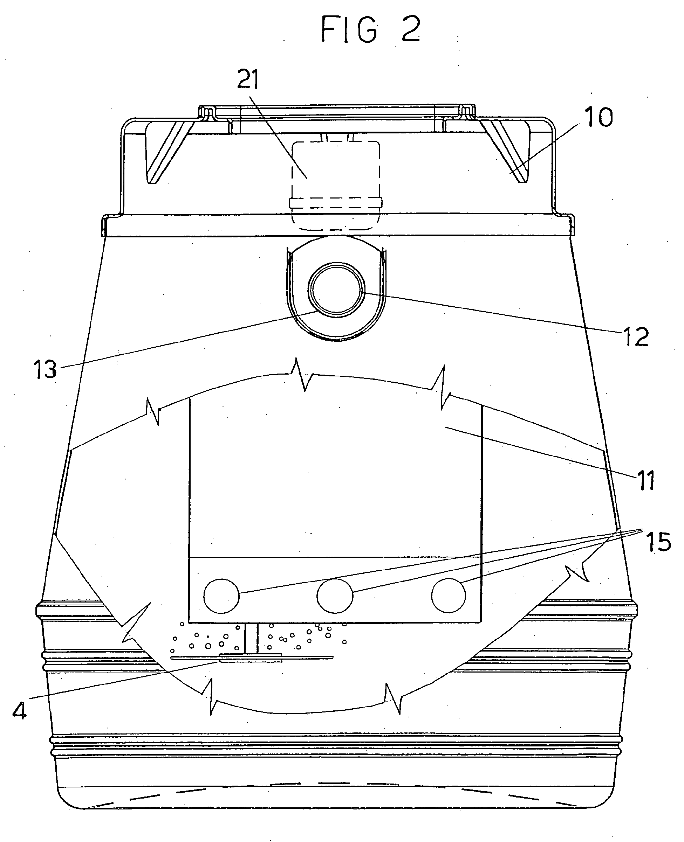

Figure 2 is a partially broken away view illustrating the activated sludge system according to the present invention and, more specifically, clearly showing the outlet portion of the sedimentation device.

### DESCRIPTION OF THE PREFERRED EMBODIMENT

With reference to the number references of the above mentioned figures, the activated sludge system for purifying waste water from civil house drains, according to the present invention, which has been generally indicated by the reference number 1, comprises an oxidation basin 2, with which a waste water inlet duct 3 communicates.

In said oxidation basin 2 a sedimentation device 11 communicating with the outside through a drain or outlet duct 12, projecting from the sedimentation device and the basin, through sealing means comprising sealing gaskets 13, is arranged.

At said sedimentation device 11, including a hopper bottom portion with three throughgoing holes 15 for communication with the basin inside, a screw-on sealing cover 16 for allowing the sedimentation device inside to be accessed, is arranged.

The main feature of the invention is that inside said oxidation basin 2 an air diffuser 4 is arranged, said air diffuser communicating with a blowing compressor 21 which is housed in a space 22 defined by the covering cap 10 overlaying the oxidation or collection basin 2.

Said cap 10 is in turn closed by a closure element 25, which is flush mounted.

With the above disclosed device, the blowing compressor is arranged in a protected region and is so located as to exclusively supply the diffuser of the basin to which it is coupled, thereby properly protecting the compressor which does not draw moistened air and, consequently, does not generate condensate susceptible to damage the compressor motor.

The arrangement of the compressor in a protected position, provides a lot of great constructional advantages, which allow to optimize the operation of the overall system.

In this connection it should be pointed out that the blowing compressor 21 can be adjusted by timing means, so as to provide an optimized and automatic operation cycle thereof.

The invention, as disclosed, is susceptible to several modifications and variations, all of which will come within the scope of the invention.

Moreover, all of the constructional details can be replaced by other technically equivalent elements.

In practicing the invention, the used materials, as well as the contingent size and shapes, can be any, depending on requirements.

## Claims

1. An activated sludge system for purifying waste water from civil house drains, comprising an oxidation basin with which a waste water inlet duct communicates, and in which a sedimentation device is arranged, said sedimentation device communicating with the outside through a drain duct, in said basin an air diffuser being moreover arranged, **characterized in that** said activated sludge system further comprises a blowing compressor coupled to said air diffuser and arranged in a space defined by a cap overlying the oxidation basin.

2. An activated sludge system, according to the preceding claim, **characterized in that** said sedimentation device has a hopper-shape bottom.

3. An activated sludge system, according to one or more of the preceding claims, **characterized in that** said sedimentation device comprises three outlet holes for providing a communication with said oxidation basin.

4. An activated sludge system, according to one or more of the preceding claims, **characterized in that** said system further comprises sealing means including a sealing gasket arranged between the outlet duct and sedimentation device, and between the outlet duct and a wall of the oxidation basin.

5. An activated sludge system, according to one or more of the preceding claims, said system further comprising a screw-on tight cover tightly closing said sedimentation device.

6. An activated sludge system, according to one or more of the preceding claims, **characterized in that** said cap comprises a closure element flush arranged for allowing inspection of the inside of the system.

7. An activated sludge system; according to one or more of the preceding claims, **characterized in that** said blowing compressor is coupled to timing means.

8. An activated sludge system, according to one or more of the preceding claims, **characterized in that** said blowing compressor is operatively coupled only to the oxidation basin thereabove said compressor is arranged.

9. An activated sludge system, according to one or more of the preceding claims, **characterized in that** said blowing compressor is so arranged as not to contact a moistened environment.
